# EUROPÄISCHE PATENTANMELDUNG

(11) **EP 3 718 617 A1**
(43) Veröffentlichungstag der Anmeldung: **07.10.2020**
(21) Anmeldenummer: 19020265.5
(22) Anmeldetag: 05.04.2019
(51) Int. Cl.: B01D 3/32, B01J 19/30, B01J 19/32

(54) **STOFFAUSTAUSCHKOLONNE**

(71) Anmelder: Linde GmbH, 82049 Pullach (DE)
(72) Erfinder: Flüggen, Rainer, 83673 Bichl (DE); Hoffmann, Rainer, 82008 Unterhaching (DE)
(74) Vertreter: Meilinger, Claudia Sabine

(57) **Zusammenfassung**

Die vorliegende Erfindung betrifft eine Stoffaustauschkolonne (100) mit einem im Wesentlichen zylindrischen Behälter (1), der in seiner axialen Richtung ein unteres Ende (100a) und ein oberes Ende definiert, und einer in dem Behälter (110) vorgesehenen geordneten Packung (120), wobei der Behälter (1) die geordnete Packung (2) unter Bereitstellung eines ringförmigen Spaltes (23) konzentrisch umgibt, wobei in dem Spalt (23) wenigstens ein Abdichtungselement (7a, 7b) vorgesehen ist, wobei das Abdichtungselement (7a, 7b) sich von seiner radial inneren Seite (27b) an der geordneten Packung (120) zu seiner radial äußeren Seite (27a) an einer Innenseite (1a) des Behälters (1) erstreckt, wobei an dem Abdichtungselement (7a, 7b) ein Abdichtungsband (40) anliegt.

## Beschreibung

Die vorliegende Erfindung betrifft eine Stoffaustauschkolonne nach dem Oberbegriff des Patentanspruchs 1.

Bei der Herstellung einer bepackten Stoffaustauschkolonne ist es üblich, die Packung schichtweise von oben in den stehenden Kolonnenbehälter einzuführen. Die verschiedenen Packungsschichten liegen dann in unterschiedlichen, entlang der Zylinderachse des Behälters aufgereihten axialen Ebenen übereinander. Es sei darauf hingewiesen, dass alle Richtungsangaben wie "axial" oder "radial" im Folgenden sich auf diese Behälterachse beziehen. Die Begriffe "oben" und "unten" beziehen sich auf das obere Ende bzw. den Kopf sowie das untere Ende bzw. den Sumpf der Stoffaustauschkolonne während des Betriebes.

In einer typischen Stoffaustauschkolonne steigt im Rahmen des Stoffaustausches eine Gasphase des Stoffes von unten nach oben auf, also in Richtung des Kopfes, und eine Flüssigphase des Stoffes rieselt von oben nach unten, also in Richtung des Sumpfes.

Zwischen Packung und Innenwand des Behälters verbleibt ein ringförmiger Spalt. Beim Betrieb der Kolonne kann Flüssigphase, die aus der Packung ausgetreten ist, in diesem Spalt entlang der Innenwand axial nach unten fließen, ohne nennenswert am Stoffaustausch mit der aufsteigenden Gasphase teilzunehmen. Entsprechendes gilt für eine Gasphase, die durch den ringförmigen Spalt nach oben aufsteigen kann, ohne am Stoffaustausch teilzunehmen. Um diese Effekte zu vermeiden, ist es bekannt, in gewissen Abständen, ringförmige Mittel zur Randabdichtung in diesen Spalt einzulegen, um insbesondere die Flüssigphase von der Innenwand bzw. vom Spalt in die Packung zurückzuleiten und einen Transport der Gasphase durch den ringförmigen Spalt zu verhindern oder wenigstens zu minimieren.

Beispielsweise ist es aus der US 515 485 9 bekannt, mehrere voneinander getrennte axial gegeneinander versetzte Randabdichtungsringe pro Packungsschicht vorzusehen, die mit der entsprechenden Packungsschicht durch Verschrauben kraftschlüssig verbunden sind. Eine Stoffaustauschkolonne mit einem derartigen ringförmigen Mittel zur Randabdichtung ist auch aus der DE 195 20 802 C2 bekannt.

Ab einer gewissen Belastung sammelt sich jedoch Flüssigkeit in derartigen Randabdichtungen, die dann von der Gasphase, die innerhalb des Behälters axial von unten nach oben aufsteigt, nach oben mitgeführt wird. Ein so entstehender Flüssigkeitspropfen kann sämtliche Randabdichtungen durchlaufen, so dass derartige Randabdichtungen keine effektive Abdichtung bilden und die Effizienz eines Stoffaustauschprozesses vermindern.

Die vorliegende Erfindung strebt an, eine Stoffaustauschkolonne mit einer verbesserten Randabdichtung zur Verfügung zu stellen. Dieses Ziel wird erreicht mit einer Stoffaustauschkolonne mit den Merkmalen des Patentanspruchs 1.

Erdindungsgemäß wird eine Stoffaustauschkolonne mit einem im Wesentlichen zylindrischen Behälter vorgeschlagen, der während des Betriebes in seiner axialen Richtung ein unteres Ende und ein oberes Ende definiert, und eine in dem Behälter vorgesehene geordnete Packung aufweist, wobei der Behälter die geordnete Packung unter Bereitstellung eines ringförmigen Spaltes konzentrisch umgibt, wobei in dem Spalt wenigstens ein Abdichtungselement vorgesehen ist, wobei das Abdichtungselement sich von einer radial inneren Seite an der geordneten Packung zu einer radial äußeren Seite an einer Innenseite des Behälters erstreckt, wobei an dem Abdichtungselement ein Abdichtungsband aus einem dichtenden Werkstoff anliegt. Unter einem dichtenden Werkstoff wird insbesondere ein Werkstoff verstanden, mittels dessen auftretende Gas- und Flüssigkeitsströme durch den ringförmigen Spalt zwischen Behälter und Packung zurückgehalten werden können. Hierbei ist das Abdichtungselement vorteilhafterweise aus einem metallischen Werkstoff, insbesondere einem geeigneten Stahlwerkstoff, wie etwa Federstahl, hergestellt.

Unter einem "im wesentlichen zylindrischen Behälter" wird insbesondere ein Behälter mit einem exakt zylindrisch geformten Mittelteil, also dem Teil des Behälters zwischen dem unteren Ende und dem oberen Ende des Behälters verstanden. Auch geringe Abweichungen von einer exakten Zylinderform, so dass sich ein Mittelteil mit einem leicht elliptischen Querschnitt ergibt, sind von dieser Formulierung umfasst. Auch Behälter mit beispielsweise toleranzbedingten Abweichungen im Querschnitt über ihre axiale Länge hinweg sind von dieser Formuliereung umfasst. Auch Schweissnähte des Behälters, welche in den Randspalt hineinragen, führen zu einer Abweichung von einer exakten Zylinderform. Auch mit derartigen Schweissnähten ausgebildete Behälter sind von der Formulierung umfasst.

Mit der erfindungsgemäßen Stoffaustauschkolonne kann der Randspalt sowohl für rieselnde Flüssigphase als auch aufsteigende Gasphase strömungsdicht bereitgestellt werden, wodurch inbesondere Bypasseffekte und hiermit einhergehende Konzentrationsvermischungen verhindert werden, welche zu einer Leistungseinbuße der Stoffaustauschkolonne führen. Das erfindungsgemäß vorgesehene Anliegen eines Abdichtungsbandes an einem Abdichtungselement verbessert die Randspaltabdichtung gegenüber aus dem Stand der Technik bekannten Lösungen signifikant.

Vorteilhafte Ausgestaltungen sind Gegenstand der Unteransprüche. Gemäß einer besonders bevorzugten Ausführungsform weist das Abdichtungsband einen Polytetrafluorethylen PTFE aufweisenden Werkstoff und/oder ein metallisches Gestrick oder Gewebe und/oder einem Glasfaserwerkstoff auf. Derartige Werkstoffe sind widerstandsfähig gegenüber Drücken und Temperaturen, insbesondere cryogenen Temperaturen, wie sie in Stoffaustauschkolonnen typischerweise herrschen. Sie weisen ferner eine hervorragende chemische Beständigkeit gegenüber hochaggressiven Stoffen, wie sie in Stoffaustauschkolonnen typischerweise auftreten, auf. Insbesondere ein Zusammenwirken von metallischen Abdichtungselementen mit Abdichtungsbändern aus derartigen Werkstoffen erweist sich als sehr vorteilhaft. Auch weisen derartige Werkstoffe eine Flexibilität und Anpassungsfähigkeit auf, derart, dass z.B. Unebenheiten oder toleranzbedingte Schwankungen des ringförmigen Spaltes zur Bereitstellung einer wirksamen Dichtung ausgeglichen werden können.

Zweckmäßigerweise ist das Abdichtungselement mit einer Anzahl von Blättern bzw. Zungen ausgebildet ist, wobei die Blätter sich, ausgehend von der radial inneren Seite des Abdichtungselements an der Packung, schräg zu der radial äußeren Seite des Abdichtungselements an der Innenseite des zylinderförmigen Behälters erstrecken, wodurch zwischen der Packung und den Blättern ein erster sich verjüngender Zwischenbereich, und zwischen den Blättern und der Innenseite des Behälters ein zweiter sich verjüngender Zwischenbereich definiert wird. Derartige Blätter, welche zweckmäßigerweise aus einem geeigneten metallischen Werkstoff, bevorzugt Federstahl, hergestellt sind, weisen eine sehr gute Stabiltät auf, so dass sie auch während des Betriebes der Stoffaustauschkolonne positions- und formstabil bleiben, und so eine ausreichend robuste Anlage bzw. Auflage für das Abdichtungsband zur Verfügung stellen. Gleichzeitig weisen sie eine gewisse Elastizität auf, so dass sie, insbesondere durch zusammenwirken mit flexiblen Abdichtungsbändern, eine wirksame Dichtung des ringförmigen Spaltes gewährleisten.

Vorteilhafterweise weist das Abdichtungsband ein sich verjüngendes, insbesondere dreieckförmiges Querschnittsprofil auf, das formkomplementär zu dem ersten oder dem zweiten sich verjüngenden Bereich ausgebildet ist. Ein erfindungsgemäßes Zusammenwirken derart formkomplementärer Elemente stellt eine sehr gute, sowie stabile und dauerhafte Abdichtung des Randspaltes zur Verfügung. Zweckmässigerweise wird hierbei das Abdichtungselement form- und/oder kraftschlüssig von dem Abdichtungsband beaufschlagt.

Es ist zweckmäßig, dass das Abdichtungsband an demAbdichtungselement oben und/oder unten form-und/oder kraftschlüssig anliegt und den ersten und/oder zweiten Zwischenbereich im wesentlichen vollständig ausfüllt. Unter "im wesentlichen vollständig" wird hierbei insbesondere ein Ausfüllen von wenigstens 70, 80, 90, 95, 98,99 oder auch 100% des Zwischenbereiches verstanden.Hiermit ist ein Form- und/oder Kraftschluss in besonders zuverlässiger Weise bereitstellbar. Es ist auch möglich, das Abdichtungsband mittels eines geeigneten Klebers an dem Abdichtungselement zu fixieren.

Zweckmässigerweise weist das Abdichtungselement wenigstens einen ringförmigen Kontaktbereich auf, der an der Außenfläche der Packung anliegt, wobei die Blätter sich ausgehend von dem ringförmigen Kontaktbereich zu der Innenseite des Behälters erstrecken. Derartige Abdichtungselemente, welche auch eine Anzahl, beispielsweise zwei, drei, vier oder mehr, von parallel sich erstreckenden ringförmigen Kontaktbereichen aufweisen können, die jeweils über axial sich erstreckende Stege miteinander verbunden sind, erweisen sich als robust und zuverlässig.

Es ist bevorzugt, dass das Abdichtungselement ringförmig ausgebildet ist und sich im Wesentlichen um den gesamten Umfang des Spaltes erstreckt. Unter "im wesentlichen" wird hierbei insbesondere eine Erstreckung über 70, 80, 90, 95, 99 oder auch 100% des Umfangs des Spaltes verstanden. Zweckmäßigerweise ist, über die axiale Länge der Stoffaustauschkolonne beispielsweise in regelmäßigen oder unregelmäßigen Abständen verteilt, eine Mehrzahl von Abdichtungselementen vorgesehen.

Die Erfindung sowie weitere Einzelheiten der Erfindung werden im folgenden anhand von in den Zeichnungen dargestellten Ausführungsbeispielen näher erläutert. Hierbei zeigt:
**Fig.** 1 ein Ausführungsbeispiel einer erfindungsgemäßen bepackten Stoffaustauschkolonne im Längsschnitt,
**Fig.** 2 die Stoffaustauschkolonne von **Fig.** 1 im Querschnitt,
**Fig.** 3 einen Detailausschnitt von **Fig.** 1,
**Fig.** 4 einen Ausschnitt eines erfindungsgemäß eingesetzten Abdichtungselements Mittels zur Randabdichtung,
**Fig.** 5 das Abdichtungselement von **Fig.** 4 im Querschnitt, und
**Fig.** 6 in einer der Fig. 5 entsprechenden Ansicht eine weitere Ausführungsform eines erfindungsgemäß eingesetzten Abdichtungselements.

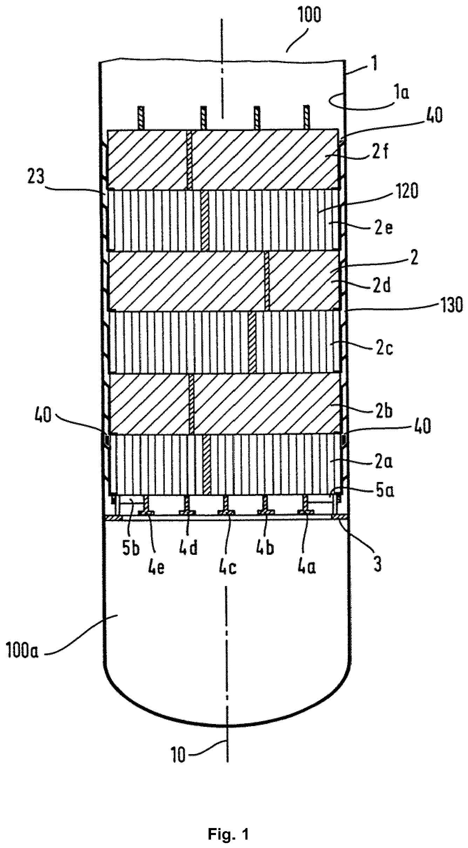

Eine erste Ausführungsform einer erfindungsgemäßen Stoffaustauschkolonne, deren unterer Teil in **Fig.** 1 gezeigt ist, ist insgesamt mit **100** bezeichnet. Sie weist ein unteres Ende (Sumpf) 100a sowie ein in den Figuren nicht dargestelltes oberes Ende (Kopf) auf.

Die Stoffaustauschkolonne 100 weist einen Behälter **1** auf, der im wesentlichen zylinderförmig um eine Achse **10** aufgebaut ist. Das Innere des Behälters **1** enthält eine geordnete Packung **2,** die in dem Beispiel aus sechs Schichten **2**a bis **2**f besteht. Zwischen dem Behälter **1** und der Packung **2** ist ein ringförmiger Spalt **23** ausgebildet.

Es kann beispielsweise jede Packung mit gewellt-gekreuzten Lamellen aus folienartigem Material eingesetzt werden, etwa der in der DE-A-42 09 132 beschriebene Packungstyp. Oberhalb des gezeichneten Packungsabschnitts können sich ein oder mehrere weitere Packungsabschnitte ähnlicher Struktur befinden, die ebenso wie Zuführ-, Abführ-, Sammel- und Verteileinrichtungen der Einfachheit halber in den Zeichnungen nicht dargestellt sind.

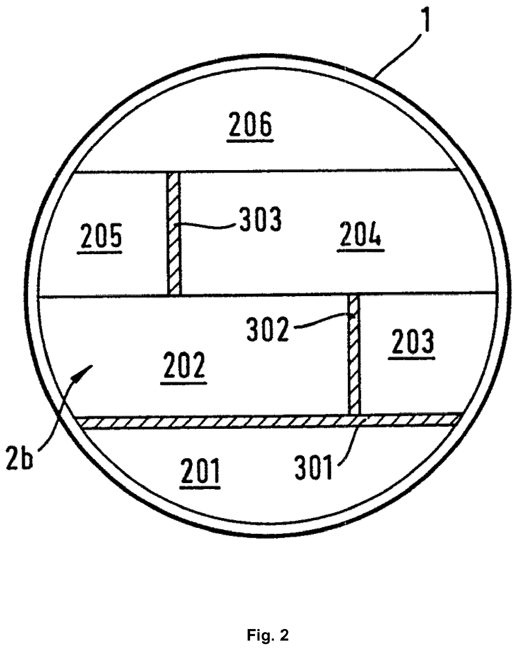

Eine Packungsschicht kann aus einer vollständig vorgefertigten Scheibe bestehen. Insbesondere bei Kolonnen größeren Durchmessers werden jedoch segmentierte Packungsschichten, wie sie in den **Fig.** 1 und 2 dargestellt sind, bevorzugt. In der Querschnittsdarstellung von **Fig.** 2 ist zum Beispiel eine Packungsschicht **2**b mit sechs Segmenten **201** bis **206** dargestellt. Hierbei sind Zwischenräume zwischen den Segmenten, welche z.B. mit einzelnen Lamellen des Packungsmaterials gefüllt sein können, mit 301-303 bezeichnet.

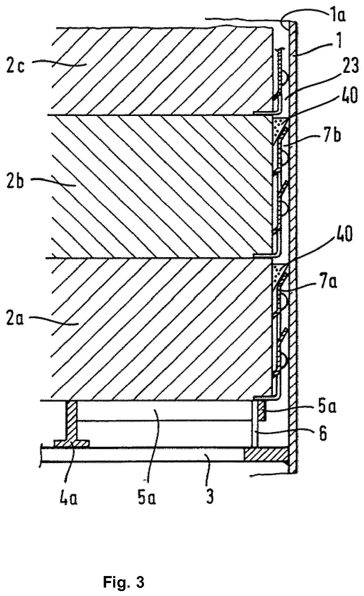

Eine Trageinrichtung (Tragrost) stützt den untersten Packungsabschnitt **2**a**.** Sie weist einen Tragring **3** auf, der um den gesamten Kolonnenumfang umläuft und mit dem Behälter **1** stoffschlüssig verbunden ist, beispielsweise durch eine Schweiß- oder Lötverbindung. Auf dem Tragring stützen sich mehrere T-Träger **4**a bis **4**e ab, auf deren Oberseite die Packung **2**a aufliegt. Zusätzlich weist die Trageinrichtung einen Auflagesteg **5**a, **5**b auf, dessen oberer Rand in derselben axialen Ebene wie der obere Rand der T-Träger **4**a bis **4**e liegt. Der Auflagesteg läuft nicht vollständig um, sondern besteht aus zwei Abschnitten **5**a, **5**b, die mit den beiden äußersten T-Trägern **4**a, **4**e jeweils ein Kreissegment bilden. In der Detailansicht von **Fig.** 3 ist zu erkennen, daß sich jeder Abschnitt **5**a des Auflagestegs über einen oder mehrere Auflagestegfüße **6** auf dem Tragring **3** abstützt. Der Abschnitt **5**a ist außerdem mit dem Träger **4**a verbunden. Der Auflagesteg **5**a, **5**b kann einerseits zur Abstützung von relativ kurzen Packungssegmenten dienen, die ansonsten nur auf einem Träger **4**a, **4**e aufliegen; andererseits hat er eine wichtige Funktion zur Abstützung von Mitteln zur Randabdichtung, die nachstehend erläutert wird.

In dem ringförmigen Spalt **23** zwischen Packung **2** und Innenwand **1a** des Behälters **1** befinden sich Abdichtungselemente bzw. Mittel zur Randabdichtung **7**a, **7**b, im Folgenden auch Doppelkrägen genannt (**Fig**. 3). Die Struktur dieser Doppelkrägen zeigen die **Fig**. 4, 5 und 6 im einzelnen. Sie weisen jeweils einen oberen und einen unteren Kontaktbereich **8**a, **8**b auf, die beide im eingebauten Zustand mindestens teilweise am äußeren Umfang der Packung **2** anliegen. Die beiden Kontaktbereiche **8**a, **8**b sind durch schmale Stege **9** miteinander verbunden, die nach dem Einbau parallel zur Kolonnenachse bzw. Achse **10** des Behälters 1, d.h. in axialer Richtung, ausgerichtet sind. Sie sind jeweils mit als Abweismitteln wirkenden elastisch angelenkten Blättern **10**a, **10**b verbunden. Die Blätter **10**a, **10**b überbrücken in der montierten Kolonne den Spalt zwischen Packung **2** und Behälterwand **1**a, indem ihre oberen bzw. radial äußeren Seiten bzw. Enden **17**a an der Innenfläche der Innenwand **1**a anliegen. Zwischen den jeweiligen Blättern sind herstellungsbedingt spaltartige Zwischenräume **18** ausgebildet.

Das als Doppelkragen ausgebildete Abdichtungselement weist mehrere Füße **11** als Anschlagmittel auf, die von der unteren Kante des unteren Kontaktbereichs **8**b nach unten und innen weisen. Jeder Fuß **11** besteht vorzugsweise aus einem vertikalen und einem horizontalen Abschnitt.

Es sei darauf hingewiesen, dass die Abdichtungselemente nicht nur als Doppelkrägen, also mit zwei miteinander verbundenen Kontaktbereichen **8**a,**8**b, ausgebildet sein können, sondern auch auch mit einem einzigen Kontaktbereich, oder auch einer größeren Anzahl von miteinander verbundenen Kontaktbereichen, beispielsweise drei, vier, fünf oder mehr derartiger Kontaktbereiche.

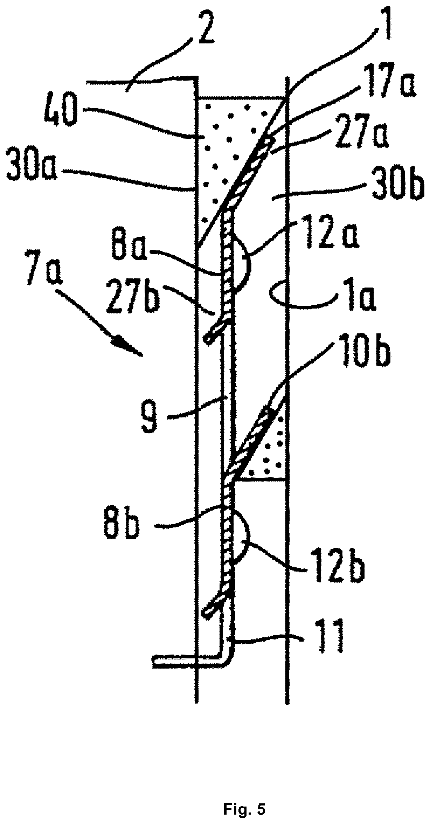

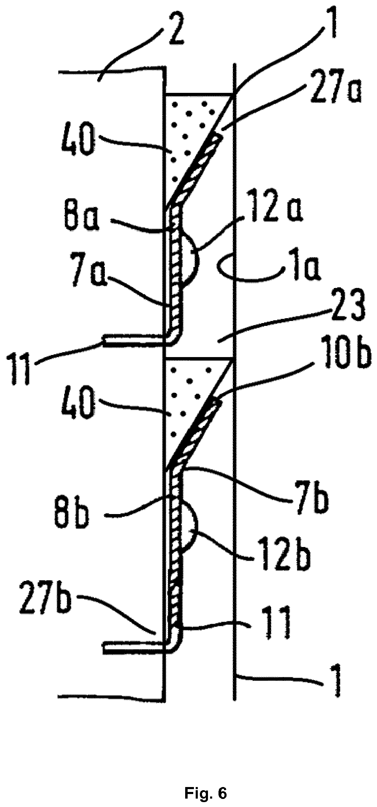

Wie insbesondere in den Figuren 3,4 und 5 erkennbar, erstrecken sich die Blätter **10**a, **10**b, ausgehend von den jeweiligen Kontaktbereichen **8**a,**8**b, in radialer Richtung schräg nach außen und oben. D.h., die radial äußeren Enden **17**a der Blätter sind jeweils, bezüglich der unteren bzw. radial innereren Enden **17**b, axial in Richtung des oberen Endes bzw. Kopfes der Stoffaustauschkolonne **100** bzw. des Behälters 1 versetzt. Hierdurch weisen die Abdichtungselemente insgesamt eine radial äußere Seite 27a und eine radial innere Seite 27b auf, wie in den Figuren 5 und 6 verdeutlicht ist.. Hierdurch werden zwei sich verjüngende Zwischenbereiche **30**a, **30**b, nämlich einerseits zwischen der Packung **2** und den Blättern **10**a, **10**b und andererseits. zwischen den Blättern **10**, **10**b und der Innenwand 1a des Behälters 1 definiert. Hierbei ist der Zwischenbereich **30a** oberhalb der Blätter, und der Zwischenbereich **30b** unterhalb der Blätter ausgebildet.

Insbesondere aufgrund der oben erwähnten spaltartigen Zwischenräume 18, aber auch aufgrund von toleranzbedingten Zwischenräumen zwischen den radial äußeren Enden **17**a der Blätter **10**a, **10**b und der Innenwnd **1**a des Behälters **1**, kommt es beim Betrieb der Stoffaustauschkolonne unter anderem zu Bypass-Strömen einer Gasphase, welche innerhalb der Packung **2** von unten nach oben aufsteigt, so dass dieser Teil der Gasphase, welcher an der Packung vorbeiströmt, nicht zum Stoffaustausch bzw. zur Rektifikation beiträgt. Ausserdem kann sich ab einer betimmten Belastung Flüssigphase in den ersten Zwischenbereichen **30**a oberhalb der Blätter **10**a, **10b** sammeln, welche dann von der aufsteigenden Gasphase von unten nach oben geschoben werden kann. Ein somit entstehender Flüssigkeitspfropfen durchläuft nacheinander, von unten nach oben, sämtliche Abdichtungselemente bzw. Doppelkrägen, wodurch die Effektivität des Prozesses ebenfallls beeinträchtigt wird.

Zur Optimierung der Abdichtung in dem ringförmigen Spalt **23** zwischen Packung **2** und Innenseite **1**a des Behälters **1** sind an wenigstens einigen der Abdichtungselemente **7**a,**7**b in den ersten und/oder zweiten Zwischenbereichen **30**a,**30**b Abdichtungsbänder **40** aus einem Material, welches resistent gegenüber den bei derartigen Stoffaustauschprozessen herrschenden Temperaturen und Drücken sowie chemisch beständig gegenüber auftretenden Stoffen ist, vorgesehen. Die Abdichtungsbänder liegen hierbei an den Blättern 10a, 10b an.Die Abdichtungsbänder **40** können insbesondere ringförmig ausgebildet sein und sich über den gesamten Umfang der Packung **2** bzw. des ringförmigen Spaltes 23 erstrecken.

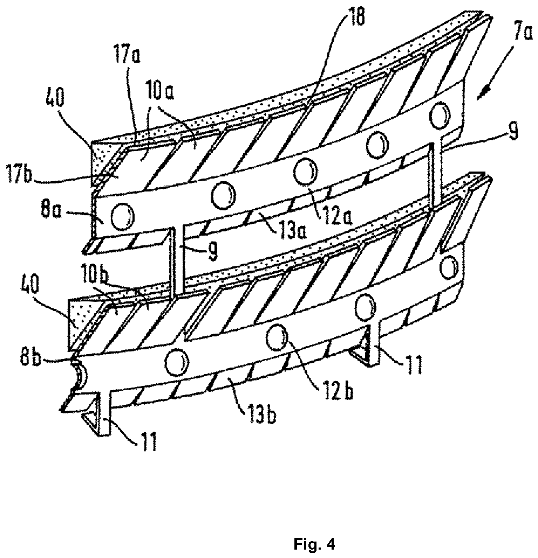

In Figur 4 ist beispielhaft jeweils in den ersten Zwischenbereichen 30a oberhalb der Blätter 10a, 10b ein derartiges Abdichtungsband 40 vorgesehen. Beide Abdichtungsbänder weisen ein im Wesentlichen dreieckiges Querschnittsprofil auf, so dass sie formkorrespondierend zu den Zwischenbereichen 30a sind. Zweckmässigerweise sind die Abdichtungsbänder aus einem anpassungsfähigen Werkstoff ausgebildet, so dass sie sich unter Bereitstellung einer form- und/oder kraftschlüssigen Verbindung in die Zwischenräume einbringen bzw. eindrücken lassen.

In Figur 5 ist an unteren Blättern 10b ein Abdichtungsband **40** in dem zweiten Zwischenbereich 30b unterhalb der Blätter 10b ausgebildet. Dieses Abdichtungsband ist ebenfalls unter Bereitstellung einer form- und/oder kraftschlüssigen Verbindung in diesen Zwischenbereich 30b eingebracht.

Als bevorzugte Werkstoffe für Abdichtungsbänder seien erwähnt Werkstoffe, die Polytetrafluoeethylen PTFE und/oder metallische Gewebe oder Gestricke und/oder Glasfasern umfassen. Derartige Werkstoffe weisen eine ausreichende Anpassungsfähigkeit auf und eignen sich daher für form- und/oder kraftschlüssige Verbindungen. Es ist insbesondere vorteilhaft, ein Abdichtungsband in Form von mehreren Bändern mit kleinerem Querschnittsprofil bereitzustellen. Hierdurch ist eine flexible Anpassung an eventuelle Toleranzen des ringförmigen Spaltes 23, beispielsweise verursacht durch eine nicht exakt konzentrische Anordnung des Packung 2 in dem Behälter 1, möglich.

Es ist günstig, wenn auf der Außenseite der Kontaktbereiche **8**a, **8**b Abstandshalter **12**a, **12**b angeordnet sind. Sie bestehen in dem Ausführungsbeispiel aus Ausdrückungen des Materials der Kontaktbereiche und definieren im eingebauten Zustand einen Mindestabstand zwischen Packung 2 und der Innenwand 1a des Behälters 1. Die Abstandshalter können auch durch zusätzlich aufgebrachtes Material gebildet sein, beispielsweise als umlaufender oder teilweise umlaufender Ring.

Es ist auch möglich, auf derartige Abstandshalter zu verziehen, da die Blätter **10**a, **10**b ebenfalls eine derartige Abstandshaltefunktion besitzen.

Zusätzlich kann einer oder jeder der Kontaktbereiche **8**a,**8**b mit einem nach innen (zur Packung) weisenden Abschnitt **13**a, **13**b verbunden sein. Diese Abschnitte **13**a, **13**b liegen im eingebauten Zustand immer an der Packung 2 an und stellen damit sicher, dass die von den Abdichtungselementen aufgefangene Flüssigkeit in die Packung **2** zurückgeführt wird. Auf derartige Abschnitte 13a, 13b kann auch verzichtet werden, wie unten im Ausführungsbeispiel gemäß Fig. 6 gezeigt ist.

Die Abdichtungselemente werden vorzugsweise als Endlosband aus einem einzigen Werkstück eines folienartigen Materials hergestellt, beispielsweise aus Metallblech einer Dicke von 0,1 bis 1,0 mm, vorzugsweise 0,2 bis 0,5 mm. Als Material wird bevorzugt Federstahl eingesetzt.

In Figur 6 ist eine weitere Ausführungsform der erfindungsgemäß einsesetzten Abdichtungselemente 7a,7b dargestellt. Hier weisen beide Abdichtungselemente jeweils nur einen Kontaktbereich 8a bzw. 8b auf. Ausserdem sind an den Kontaktbereichen keine nach innen weisenden Abschnitte 13a, 13b, wie sie gemäß der ersten Ausführungsform vorgesehen sind, ausgebildet. Hierdurch können die Kontaktbereiche 8a; 8b flächig an der Packung 2 aufliegen, woddurch die Stabilität der Abdichtungselemente 7a,7b in dem Spalt 23 günstig beeinflußt ist.

### Bezugszeichenliste

- 1: Behälter
- 1a: Innenwand des Behälters
- 3: Tragring
- 4a-4e: T-Träger
- 5a, 5b: Auflagesteg
- 6: Auflagestegfuß
- 7a, 7b: Abdichtungselemente
- 8a, 8b: Kontaktbereicht
- 10: Achse Behälter
- 10a, 10b: Blätter
- 11: Füße
- 12a, 12b: Abstandshalter
- 13a, 13b: Abschnitte der Kontaktbereiche
- 17a: oberes bzw. radial äußeres Ende der Blätter
- 17b: unteres bzw. radial inneres Ende der Blätter
- 18: spaltartige Zwischenräume
- 23: ringförmiger Spalt
- 27a: radial äußere Seite der Abdichtungselemente
- 27b: radial inner Seite der Abdichtungselemente
- 30a, 30b: Zwischenbereiche
- 40: Abdichtungsbänder
- 100: Stoffaustausch Kolonne
- 100a: unteres Ende (Sumpf)
- 201-206: Packungsschichten
- 301-303: Zwischenräume

## Patentansprüche

1. Stoffaustauschkolonne (100) mit einem im Wesentlichen zylindrischen Behälter (1), der in seiner axialen Richtung ein unteres Ende (100a) und ein oberes Ende definiert, und einer in dem Behälter (110) vorgesehenen geordneten Packung (120), wobei der Behälter (1) die geordnete Packung (2) unter Bereitstellung eines ringförmigen Spaltes (23) konzentrisch umgibt, wobei in dem Spalt (23) wenigstens ein Abdichtungselement (7a, 7b) vorgesehen ist, wobei das Abdichtungselement (7a, 7b) sich von seiner radial inneren Seite (27b) an der geordneten Packung (120) zu seiner radial äußeren Seite (27a) an einer Innenseite (1a) des Behälters (1) erstreckt,
**dadurch gekennzeichnet, dass** an dem Abdichtungselement (7a, 7b) ein Abdichtungsband (40) anliegt.

2. Stoffaustauschkolonne nach Anspruch 1, **dadurch gekennzeichnet, dass** das Abdichtungsband (40) einen Polytetrafluorethylen aufweisenden Werkstoff und/oder ein metallisches Gestrick oder Gewebe und/oder einen Glasfasern aufweisenden Werkstoff umfasst.

3. Stoffaustauschkolonne nach einem der vorstehenden Ansprüche, **dadurch gekennzeichnet, dass** das Abdichtungselement (7a, 7b) mit einer Anzahl von Blättern bzw. Zungen (10a, 10b) ausgebildet ist, wobei die Blätter sich, ausgehend von der radial inneren Seite(27b) des Abdichtungselements (7a, 7b) an der Packung (2), schräg zu der radial äußeren Seite (27a)des Abdichtungselements an der Innenseite (1a) des zylinderförmigen Behälters (1) erstrecken, wodurch zwischen der Packung (2) und den Blättern (10a, 10b) ein erster sich radial nach innen verjüngender Zwischenbereich (30a), und zwischen den Blättern und der Innenseite des Behälters ein zweiter sich radial nach außen verjüngender Zwischenbereich (30b) definiert wird

4. Stoffaustauschkolonne nach Anspruch 3, dadurch gekennzeichent, dass das Abdichtungsband (40) ein sich verjüngendes, insbesondere dreieckförmiges Querschnittsprofil aufweist, das formkomplementärzu dem ersten oder dem zweiten sich verjüngenden Bereich ausgebildet ist.

5. Stoffaustauschkolonne nach Anspruch 4, **dadurch gekennzeichnet, dass** das Abdichtungsband (40) an dem Abdichtungselement oben und/oder unten kraft- und/oder formschlüssig anliegt und den ersten und/oder zweiten Zwischenbereich (30a, 30b) im Wesentlichen vollständig ausfüllt.

6. Stoffaustauschkolonne nach einem der vorstehenden Ansprüche, **dadurch gekennzeichnet, dass** das Abdichtungselement (7a, 7b) wenigstens einen ringförmigen Kontaktbereich (8a, 8b) aufweist, der an der Außenfläche der Packung (2) anliegt, wobei die Blätter (10a, 10b) sich ausgehend von dem ringförmigen Kontaktbereich (8a, 8b) zu der Innenseite (1a) des Behälters (1) erstrecken.

7. Stoffaustauschkolonne nach einem der vorstehenden Ansprüche, **dadurch gekennzeichnet, dass** das Abdichtungselement (7a, 7b) ringförmig ausgebildet ist und sich im Wesentlichen um den gesamten Umfang des Spaltes (23) erstreckt.

8. Stoffaustauschkolonne nach einem der vorstehenden Ansprüche, **dadurch gekennzeichnet, dass** der ringförmige Kontaktbereich (8a, 8b) und die Blätter (10a, 10b) einstückig hergestellt sind.
